(19) Europäisches Patentamt
European Patent Office
Office européen des brevets

(11) **EP 2 559 787 A1**

(12) **EUROPÄISCHE PATENTANMELDUNG**

(43) Veröffentlichungstag:
**20.02.2013  Patentblatt 2013/08**

(21) Anmeldenummer: **12180414.0**

(22) Anmeldetag: **14.08.2012**

(51) Int Cl.:
*C23C 24/10* [(2006.01)]   *C23C 26/00* [(2006.01)]
*B23K 26/00* [(2006.01)]   *B23K 26/34* [(2006.01)]
*F01D 5/28* [(2006.01)]

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **17.08.2011  DE 102011081112**

(71) Anmelder: **Rolls-Royce Deutschland Ltd & Co KG**
**15827 Blankenfelde-Mahlow (DE)**

(72) Erfinder:
• **Wunderlich, Thomas**
**15834 Rangsdorf (DE)**
• **ROTH-FAGARASEANU, Dan**
**14532 Stahnsdorf (DE)**
• **GEBHARD, Susanne**
**12207 Berlin (DE)**

(74) Vertreter: **Gross, Felix**
**Patentanwälte Maikowski & Ninnemann**
**Postfach 15 09 20**
**10671 Berlin (DE)**

(54) **Verfahren zur Herstellung eines Bauteils für hohe thermische Belastungen, ein Bauteil herstellbar mit dem Verfahren und ein Flugzeugtriebwerk mit dem Bauteil**

(57)    Die Erfindung betrifft ein Verfahren zur Herstellung eines thermisch verformbaren Bauteils (10) für hohe thermische Belastungen, bei dem

a) ein erster Bereich (1) des Bauteils (10) mittels eines generativen Laserverfahrens mit einem ersten metallischem Material versehen wird oder der erste Bereich (10) besteht aus dem ersten metallischen Material,

b) ein zweiter Bereich (2) des Bauteils (10) mittels eines generativen Laserverfahrens mit einem zweiten metallischen Material versehen wird oder der zweite Bereich besteht aus dem zweiten metallischen Material,

c) wobei mindestens eines der metallischen Materialien durch ein generatives Laserverfahren aufgebracht wird und

d) für das Verhältnis des linearen Ausdehnungskoeffizienten $\alpha_1$ des ersten metallischen Materials und des linearen Ausdehnungskoeffizienten $\alpha_2$ des zweiten metallischen

Materials:

$$\frac{\alpha_2(T_2)}{\alpha_1(T_1)} = x\frac{|T_1 - T_0|}{|T_2 - T_0|} \quad,$$

mit x= 0,5 bis 1 und

$T_1$ : mittlere Betriebstemperatur auf der heißen Seite des ersten Bereiches (1),

$T_0$: Referenztemperatur, insbesondere Raumtemperatur oder eine höhere Temperatur

$T_2$: mittlere Betriebstemperatur auf der kalten Seite des zweiten Bereiches (2)

gilt

Auch ein Bauteil herstellbar mit einem solchen Verfahren und ein Flugzeugtriebwerk mit einem solchen Bauteil werden beschrieben.

**FIG 1B**

**Beschreibung**

Die Erfindung betrifft ein Verfahren zur Herstellung eines Bauteils für hohe thermische Belastungen mit den Merkmalen des Anspruchs 1, ein Bauteil herstellbar mit dem Verfahren mit den Merkmalen des Anspruchs 9 und ein Flugzeugtriebwerk mit dem Bauteil mit den Merkmalen des Anspruchs 15.

In vielen Bereichen der Technik werden Bauteile hohen Temperaturen und Temperaturgradienten ausgesetzt. In den meisten Fällen sind diese Bauteile heißen Gasen, wie z.B. Verbrennungsgasen in Feuerungen, Heizungen oder auch Flugzeugtriebwerken ausgesetzt. Abgesehen von der unmittelbaren Belastung des Materials durch die Temperatur selbst, ergeben sich insbesondere auch Verformungen auf Grund von Temperaturgradienten in den Bauteilen.

Aus der EP 2 090 752 A2 und der EP 2 025 777 A2 sind z.B. Bauteile bekannt, die in besonderer Weise für hohe Temperaturen ausgebildet sind.

Der vorliegenden Erfindung liegt die Aufgabe zu Grunde, verbesserte Lösungen für solche Art von Bauteilen zu suchen.

Dabei weist ein Verfahren zur Herstellung eines thermisch verformbaren Bauteils für hohe thermische Belastungen folgende Schritte auf:

a) Ein erster Bereich des Bauteils wird mit einem ersten metallischem Material versehen oder der erste Bereich besteht aus dem ersten metallischen Material,

b) ein zweiter Bereich des Bauteils wird mit einem zweiten metallischen Material versehen oder der zweite Bereich des Bauteils besteht aus dem zweiten metallischen Material,

c) wobei mindestens eines der metallischen Materialien durch ein generatives Laserverfahren aufgebracht wird und

d) für das Verhältnis des linearen Ausdehnungskoeffizienten $\alpha_1$ des ersten metallischen Materials und des linearen Ausdehnungskoeffizienten $\alpha_2$ des zweiten metallischen Materials:

$$\frac{\alpha_2(T_2)}{\alpha_1(T_1)} = x \frac{|T_1 - T_0|}{|T_2 - T_0|} \quad ,$$

mit x= 0,5 bis 1 und

$T_1$ : mittlere Betriebstemperatur auf der heißen Seite des ersten Bereiches

$T_0$: Referenztemperatur, insbesondere Raumtemperatur oder eine höhere Temperatur

$T_2$: mittlere Betriebstemperatur auf der kalten Seite des zweiten Bereiches

gilt.

Durch die gezielte Wahl der thermischen Ausdehnungskoeffizienten in zwei Bereichen (z.B. übereinanderliegenden Schichten) des Bauteils, können die Eigenschaften des Bauteils gezielt beeinflusst werden, wobei die Abscheidung von Materialien mittels generativer Laserverfahren diese Flexibilität noch erhöht, da Bauteile mit komplexen Geometrien und / oder Baueile mit einer besonders gezielten Materialauswahl herstellbar sind. Die Wahl des Verhältnisses der linearen Ausdehnungskoeffizienten stellt sicher, dass sich keine zu starken Verformungen bei einem Bauteil ergeben.

Vorteilhafte Ausführungsformen für generative Laserverfahren umfassen selektives Laserschmelzen, Laserauftragsschweißen, selektives Lasersintern und / oder Direct Laser Deposition. Die Verfahren können einzeln oder auch in Verbindung verwendet werden.

Auch kann es vorteilhaft sein, wenn in einer Ausführungsform mindestens ein Bereich als Gussteil ausgebildet ist. So kann die Wirtschaftlichkeit von Gussverfahren ausgenutzt werden.

Vorteilhafte Ausführungsformen für das erste Material weisen Nickellegierungen wie Ni-12Cr-6Al-4Mo-0.7Ti (Beispiel: Inconel 713), Ni-15Cr-10Co-8Mo-4.2Al-3.6Ti (Beispiel: C1023), Ni-10Co-10W-9Cr-5.5Al-2.5Mo-1.5Ti (Beispiel: MAR-M 246), Ni-10Co-10W-8.3Cr-5.5Al-3Ta-1Ti-0.7Mo (Beispiel: MAR-M247), Ni-15Co-9.5Cr-5.5Al-4.7Ti-3Mo-1V (Beispiel: Inconel 100) und Ni-9.6Co-6.5Ta-4.6Cr-6.4W-5.6Al-3Re-1Ti (Beispiel: CMSX4) sowie intermetallische Phasen aus der Gruppe der Aluminide oder Silizide auf. Vorteilhafte Ausführungsformen für das zweite Material weisen eine Nickel-Basislegierung, insbesondere Ni-20Cr-20Co-6Mo-2Ti (Beispiel: C263) und / oder 43.5Ni/Co-16.5Cr-3.3Mo-1.2Al-1.2Ti (Beispiel: PE16) auf.

Ferner liegt eine vorteilhafte Ausführungsform vor, wenn das Bauteil eine Abfolge von Bereichen i = 1, ..., N aufweist, wobei für benachbarte Bereiche (z.B. Schichten) gilt:

$$\frac{\alpha_{i+1}(T_{i+1})}{\alpha_i(T_i)} = x\frac{\left|T_i - T_0\right|}{\left|T_{i+1} - T_0\right|}$$

Der i-te Bereich ist derjenige, der relativ zum i+1 ten Bereich auf der wärmeren Seite liegt.

Somit sind die linearen Ausdehnungskoeffizienten $\alpha_i$, $\alpha_{i+1}$ benachbarter Schichten in einer bestimmten Weise aufeinander angepasst, so dass Verformungen des Bauteils vermindert werden. Dadurch lassen sich Schichtenstrukturen herstellen, wobei die Schichtdicken der Schichten gleich oder auch gezielt unterschiedlich ausgebildet sein können. Die generativen Laserverfahren erlauben hier eine große Gestaltungsfreiheit.

Eine besonders vorteilhafte Ausführungsform des Verfahrens liegt vor, wenn an dem Bauteil durch ein generatives Laserverfahren, insbesondere selektives Lasersintern oder selektives Laserschmelzen eine Kühlstruktur aufgebaut wird. Durch die generativen Laserverfahren können die Bauteile, und damit auch die Kühlstrukturen, komplexe Formen annehmen, was sich positiv auf die Kühleffizienz auswirken kann. Dabei müssen die aufeinander abgestimmten Bereiche unterschiedlicher metallischer Materialien nicht zwingend mit generativen Laserverfahren aufgebracht werden; es können z.B. auch Gussteile mit verwendet werden.

Auch ist es vorteilhaft, wenn in einer Ausführungsform für das Verhältnis der thermischen Leitfähigkeiten $\lambda_1$, $\lambda_2$ gilt:

$$\frac{\lambda_1(T)}{\lambda_2(T)} = K$$

mit K=0,2 bis 1,5 für Leitfähigkeiten bei Raumtemperatur (T=RT) und K $\leq$ 1,5 für Leitfähigkeiten bei mittlerer Betriebstemperatur T an der Grenzfläche oder im Übergangsbereich zwischen den beiden Schichten beschreibt.

Weiterhin ist es vorteilhaft, wenn im metallischen Material des zweiten Bereichs (d.h. des Bereiches, der relativ zum ersten Bereich kühler ist) einer Ausführungsform die Konzentration an Elementen mit hoher thermischer Leitfähigkeit und hohem linearen Ausdehnungskoeffizienten erhöht wird, insbesondere die Konzentration an Kupfer und /oder Aluminium. Damit kann gezielt lokal auf die Eigenschaften des Bauteils eingewirkt werden.

Auch ist es vorteilhaft, wenn der erste Bereich und / oder der zweite Bereich einer Wärmebehandlung und / oder einem heißisostatischem Pressen unterzogen werden. Die Wärmebehandlung dient der Einstellung der mechanischen Eigenschaften. Ein heißisostatisches Pressen dient insbesondere bei gesinterten Materialien der Verdichtung.

Bei der Verwendung eines Multimaterialsystems bildet sich vorteilhafterweise zwischen dem ersten Bereich und dem zweiten Bereich eine Grenzfläche oder ein Übergangsbereich zwischen den metallischen Materialien aus.

Die Aufgabe wird auch durch ein Bauteil gelöst, das insbesondere nach mindestens einem der Ansprüche 1 bis 8 herstellbar ist. Somit weist das Bauteil mindestens zwei Bereiche metallischer Materialien auf, wobei für das Verhältnis des linearen Ausdehnungskoeffizienten $\alpha_1$ des ersten metallischen Materials und des linearen Ausdehnungskoeffizienten $\alpha_2$ des zweiten metallischen Materials gilt:

$$\frac{\alpha_2(T_2)}{\alpha_1(T_1)} = x\frac{\left|T_1 - T_0\right|}{\left|T_2 - T_0\right|} \quad ,$$

mit x= 0,5 bis 1 und

$T_1$ : mittlere Betriebstemperatur auf der heißen Seite des ersten Bereiches

$T_0$: Referenztemperatur, insbesondere Raumtemperatur oder eine höhere Temperatur

$T_2$: mittlere Betriebstemperatur auf der kalten Seite des zweiten Bereiches.

Eine vorteilhafte Ausführungsform des Bauteils weist eine Abfolge von Bereichen i = 1, ..., N auf, wobei für benachbarte Bereiche gilt:

$$\frac{\alpha_{i+1}(T_{i+1})}{\alpha_i(T_i)} = x\frac{\left|T_i - T_0\right|}{\left|T_{i+1} - T_0\right|}$$

Der i-te Bereich ist derjenige, der relativ zum i+1 ten Bereich auf der wärmeren Seite liegt.

Dabei ist es besonders vorteilhaft, wenn das Bauteil als ein thermisch hoch belastbares Auskleidungselement mit einer Kühlstruktur, als Teil im Einlaufbereich einer Turbine, an einem statischen Teil einer Turbine, insbesondere einer Leitschaufel und / oder an Wandungen der Turbine, als Hitzeschild und / oder als Auskleidung einer Brennkammer ausgebildet ist.

Ferner ist es vorteilhaft, wenn für das Verhältnis der thermischen Leitfähigkeiten $\lambda_1$, $\lambda_2$ gilt:

$$\frac{\lambda_1}{\lambda_2} = K$$

mit K=0,2 bis 1,5 für Leitfähigkeiten bei Raumtemperatur und $K \leq 1,5$ für Leitfähigkeiten bei mittlerer Betriebstemperatur $T_1$ an der heißen Seite des Bauteils.

Eine weitere vorteilhafte Ausgestaltung liegt vor, wenn im metallischen Material des zweiten Bereichs die Konzentration von Elementen mit hoher thermischer Leitfähigkeit und hohem linearen Ausdehnungskoeffizienten erhöht ist, insbesondere die Konzentration an Kupfer und / oder Aluminium.

Eine vorteilhafte Ausführungsform weist eine Kühlstruktur auf.

Ferner weist eine vorteilhafte Ausführungsform eines Bauteils einen ersten Bereich und dem zweiten Bereich auf, zwischen denen eine Grenzfläche oder ein Übergangsbereich zwischen den metallischen Materialien angeordnet ist.

Die Aufgabe wird auch durch ein Flugzeugtriebwerk mit einem Bauteil nach Anspruch 9 gelöst, wobei das Bauteil insbesondere im Einlaufbereich der Turbine, an einem statischen Teil der Turbine, insbesondere einer Leitschaufel und / oder Wandungen der Turbine, als Hitzeschild und / oder Auskleidung einer Brennkammer angeordnet ist.

Die Erfindung wird nachfolgend unter Bezugnahme auf die Figuren der Zeichnung anhand mehrerer Ausführungsbeispiele näher erläutert. Es zeigen:

Fig. 1A      eine schematische Darstellung eines Bauteils gemäß dem Stand der Technik, das aus einem metallischen Material aufgebaut ist;

Fig. 1B      eine schematische Darstellung eines Bauteils gemäß einer Ausführungsform der vorliegenden Erfindung, das aus zwei unterschiedlichen metallischen Materialien aufgebaut ist;

Fig. 2      eine Schnittansicht durch eine Ausführungsform eines Bauteils mit einer Kühlstruktur;

Fig 3A, B      eine schematische Darstellung eines Multimaterialsystems (Fig. 3A) und eines Einmaterialsystems (Fig. 3B).

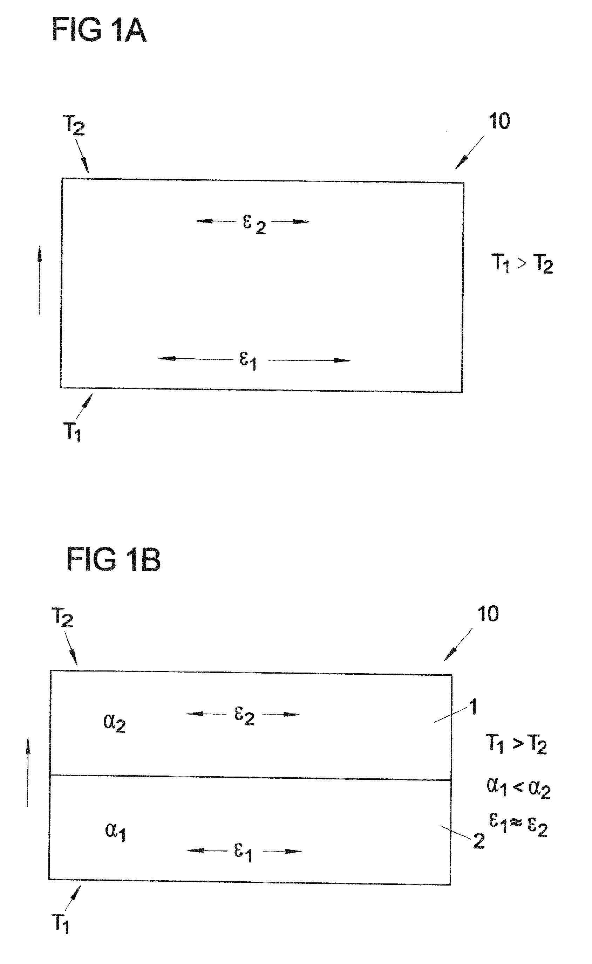

In Fig. 1A ist schematisch ein Bauteil 10 in Form eines Quaders dargestellt, das aus einem metallischen Material besteht. Der Bauteil 10 ist auf seiner Unterseite einer relativ hohen Temperatur $T_1$ ausgesetzt, an der Oberseite einer tieferen Temperatur $T_2$. Somit liegt ein Temperaturgradient in Pfeilrichtung an, d.h. die Wärme fließt von der Unterseite zur Oberseite des Bauteils 10.

Da das Bauteil 10 homogen aus einem metallischen Material gefertigt ist, ist der lineare Ausdehnungskoeffizient $\alpha$ im Bauteil 10 des Werkstoffs allein von der Temperatur abhängig und steigt mit zunehmender Temperatur.

Auf Grund der lokal unterschiedlichen Erwärmung (insbesondere auf Grund des Temperaturgradienten) dehnt sich aber das Material des Bauteils 10 in unterschiedlichen Bereichen unterschiedlich aus, d.h. es gibt lokal unterschiedliche Dehnungen $\varepsilon_1$, $\varepsilon_2$. Im heißeren Bereich der $T_1$ (d.h. der Unterseite des Bauteils 10) ist die Dehnung $\varepsilon_1$ höher als im kühleren Bereich der $T_2$ (d.h. an der Oberseite des Bauteils 10), d.h. die Dehnung $\varepsilon_2$ ist kleiner. Somit wird die Unterseite des Bauteils 10 (d.h. die heiße Seite) auf Grund der Dehnungen auf Druck belastet, die Oberseite des Bauteils (d.h. die kalte Seite) auf Zug. In Fig. 1 sind die Dehnungen durch Pfeile angedeutet. Längere Pfeile stellen eine größere Dehnung dar.

Das Bauteil 10 ist grundsätzlich unter thermischer Belastung verformbar und nicht starr, d.h. es ist z.B. nicht so eingebaut, dass eine Verformung nicht möglich ist. Die unterschiedlichen Ausdehnungen $\varepsilon_1$, $\varepsilon_2$ führen dazu, dass das Bauteil 10 seine geometrische Form verändert, was unerwünscht ist. Es geht somit bei dieser Ausführungsform primär nicht um die Veränderung der internen Spannungsverteilung, sondern um Geometrietreue gerade unter hohen thermischen Belastungen.

In Fig. 1B ist in einer Ausführungsform dargestellt, wie Verformungen verringert oder gar vermieden werden können. Dazu ist das Bauteil 10 aus Bereichen 1, 2 mit zwei metallischen Materialien aufgebaut.

Der Temperaturgradient wirkt wieder, wie im Zusammenhang mit Fig. 1A dargestellt, von der Unterseite zur Oberseite. Ein unterer Bereich 1 des Bauteils 10, der der höheren Temperatur $T_1$ zugewandt ist, weist ein metallisches Material mit einem kleineren Längenausdehnungskoeffizienten $\alpha_1$ auf als der obere Bereich 2, der der tieferen Temperatur $T_2$ zugewandt ist: $\alpha_1 < \varepsilon_2$.

Dies bedeutet, dass sich der untere Bereich 1, der hier als Schicht 1 ausgebildet ist, relativ nicht so stark ausdehnen kann, wie der obere Bereich 2, der ebenfalls als Schicht ausgebildet ist. Durch geeignete Abstimmung der Materialien und der entsprechenden thermischen Ausdehnungskoeffizienten $\alpha_1$, $\alpha_2$, kann erreicht werden, dass die Dehnungen $\varepsilon_1$, $\varepsilon_2$ in der oberen und unteren Schicht sich annähern oder gar in etwa gleich sind, so dass die Verformung des Bauteils 10 verringert oder verhindert wird. Des Weiteren bieten sich Möglichkeiten der Kosteneinsparung, wenn für die kühleren Bereiche des Bauteils 10 u. U. preiswertere Materialien verwendet werden können.

Für die Bestimmung der linearen Ausdehnungskoeffizienten $\alpha_1$, $\alpha_2$ in den Bereichen 1, 2 lassen sich vorteilhafte Ausführungsformen angeben. Grundsätzlich gilt:

$$\alpha_1(T_1) \times (T_1 - T_0) = \varepsilon_1$$

$$\alpha_2(T_2) \times (T_0 - T_2) = \varepsilon_2$$

Die Dehnungen $\varepsilon_1$, $\varepsilon_2$ hängen somit von den Temperaturdifferenzen über die Bereiche 1, 2 des Bauteils 10 und den linearen Ausdehnungskoeffizienten $\alpha_1$, $\alpha_2$ ab. Die Temperatur $T_0$ ist eine Referenztemperatur, die z.B. die Raumtemperatur oder eine höhere Temperatur sein kann.

Wenn die Dehnungen $\varepsilon_1$, $\varepsilon_2$ in den Bereichen 1, 2, des Bauteils 10 aufeinander angepasst sein so sollen, so kann dies mit folgender Bedingung erreicht werden:

$$\frac{\alpha_2(T_2)}{\alpha_1(T_1)} = x \frac{|T_1 - T_0|}{|T_2 - T_0|} \ ,$$

wobei x zwischen 0,5 und 1 liegt. Die Temperaturen $T_1$, $T_2$ sind dabei als mittlere Temperaturen im Betrieb zu verstehen. $T_0$ ist eine Referenztemperatur.

Wenn man im Designfall die Temperaturen $T_1$, $T_2$, $T_0$ eines Bauteils 10 kennt und man einen Faktor x wählt, können Materialpaarungen mit den geeigneten thermischen Ausdehnungskoeffizienten gewählt werden, damit die Verformungen des Bauteils 10 verkleinert werden.

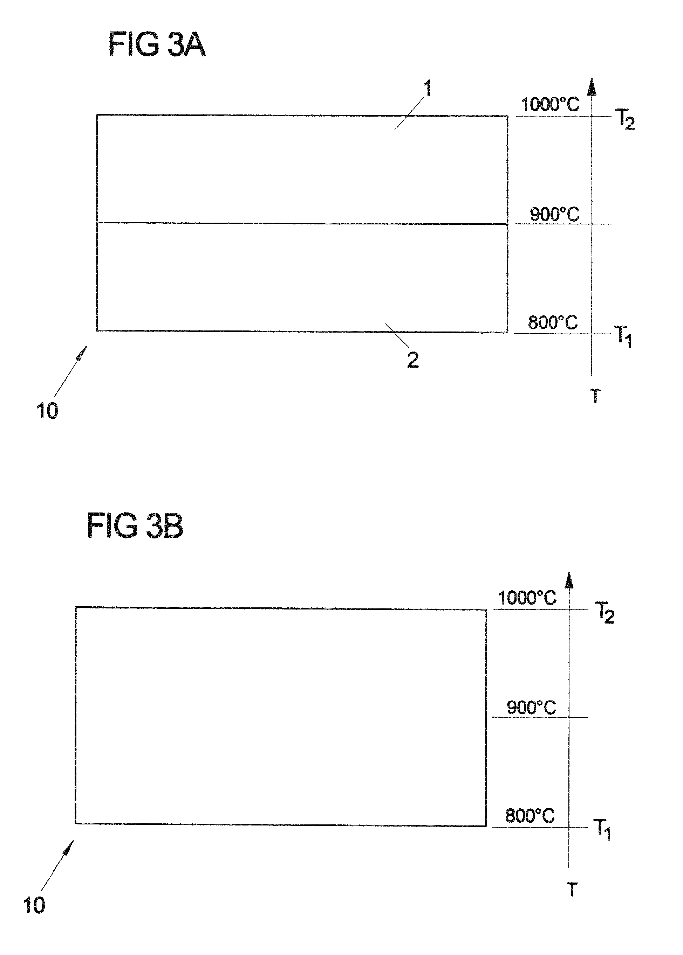

Im Folgenden wird anhand eines Zahlenbeispiels und den Fig. 3A, B eine Ausführungsform näher beschrieben,

Dabei wird ein Multimaterialsystem mit zwei Komponenten und einem scharfen Übergang an der Grenzfläche (Fall 1, Fig. 3A) mit einem Einmaterialsystem (Fall 2, Fig. 3B) verglichen.

Im vorliegenden Fall weist das Multimaterialsystem Inconel 100 auf der heißeren Seite, und C 263 auf der kühleren Seite auf. Das Einmaterialsystem weist durchgehend Inconel 100 auf.

Im vorliegenden Fall soll die Temperatur an der kühleren Seite 800 °C, an der heißeren Seite 1000 °C betragen. An der Grenzfläche zwischen den beiden Materialsystemen beträgt die Temperatur 900 °C.

Wenn hier von einer Grenzfläche gesprochen wird, so kann das in anderen Ausführungsformen auch ein Übergangsbereich zwischen zwei Materialsystemen sein. So kann insbesondere bei der Verwendung von Pulvern eine Vermischung eintreten, so dass im fertig gestellten Bauteil 10 keine feste Grenzfläche existiert. Auch ist es möglich, dass in einer anderen Ausführungsform zwischen zwei Materialbereichen 1, 2 eine Verbindungsschicht (z.B. eine Lotschicht) angeordnet ist. Als Referenztemperatur $T_0$ wird hier Raumtemperatur angenommen.

| Material 1: Inconel 100 | Material 1 = Material 2: Inconel 100 |
|---|---|
| Material 2: C263 | |
| $\alpha_1$ (1000 °C) = 1,6 E-5 1/K | $\alpha_1$ (1000 °C) = 1,6 E-5 1/K |
| $\alpha_2$ (800 °C) = 1,7 E-5 1/K | $\alpha_1$ (900 °C) = 1,5 E-5 1/K |
| $\alpha_1$ (900 °C) = 1,5 E-5 1/K | $\alpha_1$ (800 °C) = 1,4 E-5 1/K |
| $\alpha_2$ (900 °C) = 1,8 E-5 1/K | |

Die thermischen Ausdehnungen berechnen sich damit wie folgt:

| Fall 1: Heiße Seite | Fall 2: Heiße Seite |
|---|---|
| $\varepsilon_1 = \alpha_1(1000°C) \times (1000°C-21°C)=1{,}6E{-}2$ | $\varepsilon_1 = \alpha_1(1000°C) \times (1000°C-21°C)=1{,}6E{-}2$ |
| **Fall 1: Grenzfläche** | **Fall 2: Grenzfläche** |
| $\varepsilon_1 = \alpha_1(900°C) \times (900°C-21°C)=1{,}3E{-}2$ | $\varepsilon_1 = \alpha_1(900°C) \times (900°C-21°C)=1{,}3E{-}2$ |
| $\varepsilon_2 = \alpha_2(900°C) \times (900°C-21°C)=1{,}6E{-}2$ | |
| **Fall 1: Kalte Seite** | **Fall 2: Kalte Seite** |
| $\varepsilon_2 = \alpha_2(800°C) \times (800°C-21°C)=1{,}3E{-}2$ | $\varepsilon_1 = \alpha_1(800°C) \times (800°C-21°C)=1{,}1E{-}2$ |

Damit wird deutlich, dass im Fall des Multimaterialsystems die Differenz der Dehnungen ($\varepsilon_1 - \varepsilon_2$) mit 0,3 E-2 kleiner ist, als im Fall des Einmaterialsystems (0,5 E-2). Dies zeigt, dass das gewählte Materialsystem im Fall 1 geometrietreuer ist, als das System gemäß Fall 2. Allerdings zeigt das Beispiel auch, dass im Bereich der Grenzfläche Schubspannungen auftreten.

Der Wert x aus der Gleichung für das Verhältnis der linearen Ausdehnungskoeffizienten beträgt 0,85.

Alternativ oder zusätzlich können Materialpaarungen anhand von Bedingungen für die Leitfähigkeit $\lambda$ angeben werden. Bei Raumtemperatur gilt:

$$\frac{\lambda_1}{\lambda_2} = y$$

mit y= 0,2 bis 1,5. $\lambda_1$ ist die thermische Leitfähigkeit des ersten Bereichs 1 des Bauteils 10 (heiße Seite), $\lambda_2$ ist die thermische Leitfähigkeit des zweiten Bereichs 2 des Bauteils 10 (kalte Seite). Ferner gilt für eine typische mittlere Betriebstemperatur $T_1$ einer Flugzeugturbine:

$$\frac{\lambda_1}{\lambda_2} = z$$

mit $z \leq 1{,}5$.

Das metallische Material der ersten Schicht 1 kann z.B. Ni-12Cr-6Al-4Mo-0.7Ti (Beispiel: Inconel 713), Ni-15Cr-10Co-8Mo-4.2Al-3.6Ti (Beispiel: C1023), Ni-10Co-10W-9Cr-5.5Al-2.5Mo-1.5Ti (Beispiel: MAR-M 246), Ni-10Co-10W-8.3Cr-5.5A1-3Ta-1Ti-0.7Mo (Beispiel: MAR-M247), Ni-15Co-9.5Cr-5.5Al-4.7Ti-3Mo-1V (Beispiel: Inconel 100) und Ni-9.6Co-6.5Ta-4.6Cr-6.4W-5.6Al-3Re-1Ti (Beispiel: CMSX4) sowie intermetallische Phasen aus der Gruppe der Aluminide oder Silizide sein. Vorteilhafte Ausführungsformen für das zweite Material weisen eine Nickel-Basislegierung, insbesondere Ni-20Cr-20Co-6Mo-2Ti (Beispiel: C263) und / oder 43.5Ni/Co-16.5Cr-3.3Mo-1.2Al-1.2Ti (PE16) auf. Vorteilhafte Materialpaarungen sind insbesondere auch:

| Heiße Seite (erste Schicht 1) | Kalte Seite (zweite Schicht 2) |
|---|---|
| Ni-10Co-10W-9Cr-5.5Al-2.5Mo-1.5Ti | Ni-20Cr-20Co-6Mo-2Ti |
| Ni-15Co-9.5Cr-5.5Al-4.7Ti-3Mo-1V | Ni-20Cr-20Co-6Mo-2Ti |
| Ni-9.6Co-6.5Ta-4.6Cr-6.4W-5.6Al-3Re-1Ti | Ni-20Cr-20Co-6Mo-2Ti |

In weiteren Ausführungsformen können gezielt Elemente mit hoher Wärmeleitung und thermischer Ausdehnung im kalten zweiten Bereich 2 eingesetzt werden. Beispiel dafür sind Kupfer und / oder Aluminium. Durch die Konzentrationserhöhung dieser Metalle im zweiten Bereich 2 wird ebenfalls eine Verminderung der Verformungen erreicht.

In einer weiteren Ausführungsform des Verfahrens erfolgt nach dem Aufbringen des ersten Bereichs 1 und / oder des zweiten Bereichs 2 eine Wärmebehandlung und / oder ein heißisostatisches Pressen

In Fig. 1B ist aus Gründen der Übersichtlichkeit ein Bauteil 10 mit zwei Bereichen 1, 2, (als Schichten) dargestellt.

In alternativen Ausführungsformen weist das Bauteil 10 einen Schichtenaufbau auf, der aus einer Abfolge von Bereichen mit metallischen Materialien besteht, wobei die linearen Ausdehnungskoeffizienten relativ zueinander folgende Bedingungen erfüllen:

$$\frac{\alpha_{i+1}(T_{i+1})}{\alpha_i(T_i)} = x\,\frac{|T_i - T_0|}{|T_{i+1} - T_0|}$$

Damit ist bei mehr als zwei Bereichen (i = 2, 3, 4, 5...) eine feinere Graduierung der Materialeigenschaften möglich.

Auf diese Arten kann z. B. eine Art Schichtenaufbau mit drei oder mehr Bereichen 1, 2 unterschiedlicher Materialien aufgebaut werden. Dabei ist es nicht zwingend, dass über das gesamte Schichtsystem die Dicke der Schichten gleich ist. In jedem Fall entsteht ein Schichtensystem mit gradierten Eigenschaften, d.h. Eigenschaften, die aufeinander abgestimmt sind.

In Fig. 1B sind zwei Bereiche 1, 2 dargestellt, deren Materialeigenschaften aufeinander abgestimmt sind. Dabei können alle Bereiche 1, 2 durch ein generatives Laserverfahren aufgebaut werden. Alternativ kann mindestens ein erster Bereich 1, 2 ein Substrat darstellen, dass z.B. ein Gussteil ist. Auf dieses Substrat kann dann der zweite Bereich 2, 1 mit einem generativen Laserverfahren aufgebracht werden. Bei dieser Ausführungsform müssen dann die Materialeigenschaften (insbesondere Ausdehnungskoeffizienten) von Gussteil und dem aufgebrachten Bereich gemäß den obigen Ausführungen aufeinander abgestimmt sein.

Die Darstellung der Fig. 1B stellt den schematischen Aufbau einer Doppelschicht dar, die mittels generativer Laserverfahren aufgebracht wird.

Zu den generativen Laserverfahren gehören insbesondere das Laserauftragsschweißen (Laser Cladding), das selektive Lasersintern (Selective Laser Sintering (SLS)), das selektive Laserschmelzen (Selective Laser Melting (SLM)) und die Direct Laser Deposition (DLD).

Die Verfahren können bei der Herstellung von Bauteilen auch kombiniert werden. In allen Fällen werden metallische Schichten mittels Laserstrahlung auf einem Substrat generiert.

Mit Laserauftragsschweißen können Bauteile 10 mit gradierten Schichtsystemen aufgebaut werden, so dass Eigenschaften wie der thermische Ausdehnungskoeffizient $\alpha$ und die Wärmeleitung lokal gezielt einstellbar sind. Der Schichtaufbau erfolgt dabei mittels Aufschmelzen des betreffenden Materials (in Pulverform oder als Draht). Es ist damit möglich, Schichten mit Dicken zwischen 0,1 mm bis mehreren Zentimetern präzise aufzubringen. Dabei geht das aufgebrachte Material eine Bindung mit dem darunter liegenden Substrat ein. Weitere Vorteile sind, dass eine große Bandbreite an Materialien aufgebracht werden kann und der Wärmeeintrag in das Substrat selbst relativ klein ist. Allerdings sind keine Hinterschneidungen mit diesem Verfahren herstellbar.

Beim Lasersintern (Selective Laser Sintering) wird eine räumliche Struktur durch Sintern aus einem pulverförmigen Ausgangsstoff hergestellt. Durch den schichtenweisen Aufbau der Schichten durch ein selektives Aufschmelzen des Pulvers durch einen Laser aus dem Pulverbett können auch Bauteile mit Hinterschneidungen realisiert werden. Wenn beim Aufschmelzen des pulverförmigen Materials keine Bindemittel verwendet werden, sondern das metallische Pulver vollkommen aufgeschmolzen wird, wird dies selektives Laserschmelzen (Selective Laser Melting) genannt.

So können insbesondere das selektive Lasersintern (SLS) und das Laserauftragschweißen miteinander kombiniert werden. Die Kombination ist vor allem dann sinnvoll, wenn unterschiedliche Stärken der Verfahren ausgenutzt werden sollen. Beim Laserauftragschweißen ist es relativ einfach, die Materialien zu wechseln, da an der Schweißstelle das Pulver aufgeblasen wird. Allerdings sind bei diesem Verfahren komplexe Bauteilgeometrien eher schwer herstellbar. Hingegen sind beim Lasersintern komplexe Bauteilgeometrien einfach herstellbar, allerdings ist der Wechsel des Materials schwerer möglich, das das Pulver in Form eines Bettes vorliegt. Somit sind beide Verfahren komplementär.

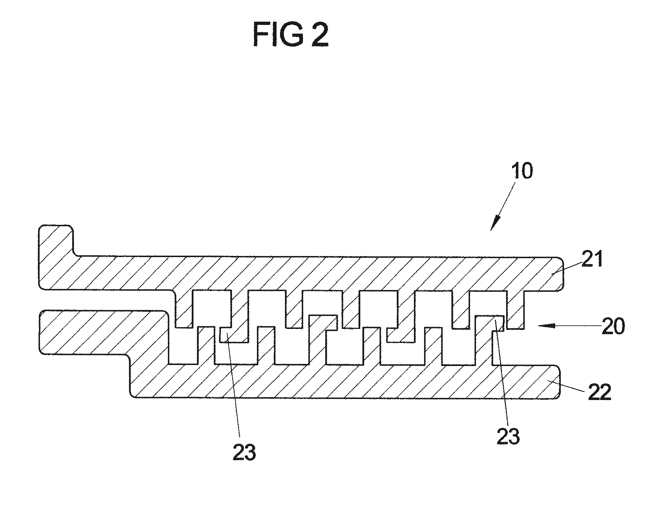

Fig. 2 zeigt schematisch den Querschnitt durch ein Bauteil 10, das eine Kühlstruktur 20 mit einer komplexen Geometrie aufweist. Dabei weist die Kühlstruktur 20 ein erstes Element 21 und ein zweites Element 22 auf, wobei der Zwischenraum von Kühlgas durchströmt wird. Die Elemente 21, 22 sind in Bereichen, die in Fig. 2 nicht dargestellt sind, miteinander verbunden, so dass ein Temperaturgradient über das Bauteil 10 auch zur einer Verformung des Bauteils 10 führt.

Die Einzelheiten der Kühlstruktur 20 weisen z.B. Hinterschneidungen 23 auf, die mittels der generativen Laserverfahren effizient herstellbar sind.

An der Unterseite des Bauteils 10, dem ersten Element 21 liegt die heiße Temperatur 1, an der Oberseite, dem zweiten Element die relativ dazu kühlere Temperatur $T_2$ an. Somit stellt das erste Elemente 21, den ersten Bereich 1 dar, das zweite Element 22 den zweiten Bereich 2. Die für die linearen Ausdehnungskoeffizienten $\alpha_1$, $\alpha_2$ gilt die im Zusammenhang mit der Fig. 1B aufgestellte Beziehung.

Bezugszeichenliste

1    erster Bereich des Bauteils

2    zweiter Bereich des Bauteils

10    Bauteil

20    Kühlstruktur

21    erstes Element der Kühlstruktur

22    zweites Element der Kühlstruktur

23    Hinterschneidung an Kühlstruktur

$T_0$    Referenztemperatur (z.B. Raumtemperatur)

$T_1$    Temperatur an der Unterseite des Bauteils

$T_2$    Temperatur an der Oberseite des Bauteils

$\alpha_1$    thermischer Längsausdehnungskoeffizient erster Bereich

$\alpha_2$    thermischer Längsausdehnungskoeffizient zweiter bereich

$\varepsilon_1$    Dehnung untere Schicht

$\varepsilon_2$    Dehnung obere Schicht

**Patentansprüche**

1.  Verfahren zur Herstellung eines thermisch verformbaren Bauteils (10) für hohe thermische Belastungen, bei dem

    a) ein erster Bereich (1) des Bauteils (10) mittels eines generativen Laserverfahrens mit einem ersten metallischem Material versehen wird oder der erste Bereich (10) besteht aus dem ersten metallischen Material,
    b) ein zweiter Bereich (2) des Bauteils (10) mittels eines generativen Laserverfahrens mit einem zweiten metallischen Material versehen wird oder der zweite Bereich besteht aus dem zweiten metallischen Material,
    c) wobei mindestens eines der metallischen Materialien durch ein generatives Laserverfahren aufgebracht wird und
    d) für das Verhältnis des linearen Ausdehnungskoeffizienten $\alpha_1$ des ersten metallischen Materials und des linearen Ausdehnungskoeffizienten $\alpha_2$ des zweiten metallischen Materials:

$$\frac{\alpha_2(T_2)}{\alpha_1(T_1)} = x\,\frac{|T_1 - T_0|}{|T_2 - T_0|}\quad,$$

    mit x= 0,5 bis 1 und
    $T_1$ : mittlere Betriebstemperatur auf der heißen Seite des ersten Bereiches (1)
    $T_0$: Referenztemperatur, insbesondere Raumtemperatur oder eine höhere Temperatur
    $T_2$: mittlere Betriebstemperatur auf der kalten Seite des zweiten Bereiches (2)

gilt.

2. Verfahren nach Anspruch 1, **dadurch gekennzeichnet, dass** die generativen Laserverfahren selektives Laserschmelzen, Laserauftragsschweißen, selektives Lasersintern und / oder Direct Laser Deposition umfassen.

3. Verfahren nach Anspruch 1 oder 2, **dadurch gekennzeichnet, dass** das erste Material Ni-12Cr-6Al-4Mo-0.7Ti, Ni-15Cr-10Co-8Mo-4.2Al-3.6Ti, Ni-10Co-10W-9Cr-5.5Al-2.5Mo-1.5Ti, Ni-10Co-10W-8.3Cr-5.5Al-3Ta-1Ti-0.7Mo, Ni-15Co-9.5Cr-5.5Al-4.7Ti-3Mo-1V und Ni-9.6Co-6.5Ta-4.6Cr-6.4W-5.6Al-3Re-1Ti sowie intermetallische Phasen aus der Gruppe der Aluminide oder Silizide sein kann und/ oder dass das zweite Material eine Nickel-Basislegierung, insbesondere eine Nickel-Chrom-Cobalt-Legierung wie Ni-20Cr-20Co-6Mo-2Ti und / oder 43.5Ni/Co-16.5Cr-3.3Mo-1.2Al-1.2Ti ist.

4. Verfahren nach mindestens einem der vorhergehenden Ansprüche, **dadurch gekennzeichnet, dass** das Bauteil (10) eine Abfolge von Bereichen i = 1, ...N aufweist, wobei für benachbarte Bereiche, insbesondere Schichten gilt:

$$\frac{\alpha_{i+1}(T_{i+1})}{\alpha_i(T_i)} = x \frac{|T_i - T_0|}{|T_{i+1} - T_0|}$$

5. Verfahren nach mindestens einem der vorhergehenden Ansprüche, **dadurch gekennzeichnet, dass** für das Verhältnis der thermischen Leitfähigkeiten $\lambda_1$, $\lambda_2$ gilt:

$$\frac{\lambda_1}{\lambda_2} = K$$

mit K=0,2 bis 1,5 für Leitfähigkeiten bei Raumtemperatur und K $\leq$ 1,5 für Leitfähigkeiten bei mittlerer Betriebstemperatur $T_1$ an der heißen Seite des Bauteils 10.

6. Verfahren nach mindestens einem der vorhergehenden Ansprüche, **dadurch gekennzeichnet, dass** im metallischen Material des zweiten Bereichs 2 die Konzentration mit Elementen mit hoher thermischer Leitfähigkeit und hohem linearen Ausdehnungskoeffizienten erhöht wird, insbesondere die Konzentration an Kupfer und /oder Aluminium.

7. Verfahren nach mindestens einem der vorhergehenden Ansprüche, **dadurch gekennzeichnet, dass** nach dem Aufbringen des ersten Bereichs (1) und / oder des zweiten Bereichs (2) eine Wärmebehandlung, insbesondere ein heißisostatisches Pressen erfolgt.

8. Verfahren nach mindestens einem der vorhergehenden Ansprüche, **dadurch gekennzeichnet, dass** zwischen dem ersten Bereich (1) und dem zweiten Bereich (2) sich eine Grenzfläche oder eine Übergangsbereich zwischen den metallischen Materialien ausbildet.

9. Bauteil insbesondere herstellbar nach mindestens einem der Ansprüche 1 bis 8,
   **gekennzeichnet durch,**
   mindestens zwei Bereiche (1, 2) metallischer Materialien, wobei für das Verhältnis des linearen Ausdehnungskoeffizienten $\alpha_1$ des ersten metallischen Materials und des linearen Ausdehnungskoeffizienten $\alpha_2$ des zweiten metallischen Materials gilt:

$$\frac{\alpha_2(T_2)}{\alpha_1(T_1)} = x \frac{|T_1 - T_0|}{|T_2 - T_0|} \quad,$$

mit x= 0,5 bis 1 und
$T_1$ : mittlere Betriebstemperatur auf der heißen Seite des ersten Bereiches (1),
$T_0$: Referenztemperatur, insbesondere Raumtemperatur oder eine höhere Temperatur,
$T_2$: mittlere Betriebstemperatur auf der kalten Seite des zweiten Bereiches (2)

10. Bauteil nach Anspruch 9, **gekennzeichnet durch** eine Abfolge von Bereichen (1, 2) i = 1, ...N, wobei für benachbarte Bereiche gilt:

$$\frac{\alpha_{i+1}(T_{i+1})}{\alpha_i(T_i)} = x\frac{\left|T_i - T_0\right|}{\left|T_{i+1} - T_0\right|}$$

11. Bauteil nach Anspruch 9 oder 10, **dadurch gekennzeichnet, dass** es als ein thermisch hoch belastbares statisches Bauteil, als Bauteil im Einlaufbereich der Turbine, als Bauteil an einem statischen Teil der Turbine, insbesondere einer Leitschaufel und / oder Wandungen der Turbine, als Hitzeschild, Auskleidungselement mit einer Kühlstruktur (20) und / oder Auskleidung einer Brennkammer ausgebildet ist.

12. Bauteil nach mindestens einem der Ansprüche 9 bis 11, **dadurch gekennzeichnet, dass** bei einer thermischen Belastung mit einem Temperaturgradienten der Unterschied der thermischen Ausdehnung an der heißen Seite $\varepsilon_1$ des ersten Materials und der thermischen Ausdehnung $\varepsilon_2$ des zweiten Materials an der kalten Seite im Vergleich zur Ausführung des Bauteils mit nur einem Werkstoff verringert wird.

13. Bauteil nach mindestens einem der Ansprüche 9 bis 12, **dadurch gekennzeichnet, dass** für das Verhältnis der thermischen Leitfähigkeiten $\lambda_1$, $\lambda_2$ gilt:

$$\frac{\lambda_1}{\lambda_2} = K$$

mit K=0,2 bis 1,5 für Leitfähigkeiten bei Raumtemperatur und $K \leq 1,5$ für Leitfähigkeiten bei mittlerer Betriebstemperatur $T_1$ an der heißen Seite des Bauteils 10.

14. Bauteil nach mindestens einem der Ansprüche 9 bis 13, **dadurch gekennzeichnet, dass** im metallischen Material des zweiten Bereichs 2 die Konzentration mit Elementen mit hoher thermischer Leitfähigkeit und hohem linearen Ausdehnungskoeffizienten erhöht wird, insbesondere die Konzentration an Kupfer und /oder Aluminium.

15. Flugzeugtriebwerk mit einem Bauteil nach mindestens einem der Ansprüche 9 bis 14, wobei das Bauteil insbesondere im Einlaufbereich der Turbine, an einem statischen Teil der Turbine, insbesondere einer Leitschaufel und / oder Wandungen der Turbine, als Hitzeschild und / oder Auskleidung einer Brennkammer angeordnet ist.

## FIG 1A

$T_2$

10

$\leftarrow \varepsilon_2 \rightarrow$

$T_1 > T_2$

$\leftarrow \varepsilon_1 \rightarrow$

$T_1$

## FIG 1B

$T_2$

10

$\alpha_2$     $\leftarrow \varepsilon_2 \rightarrow$

1

$T_1 > T_2$

$\alpha_1 < \alpha_2$

$\alpha_1$     $\leftarrow \varepsilon_1 \rightarrow$

2 $\varepsilon_1 \approx \varepsilon_2$

$T_1$

# FIG 2

## FIG 3A

1000°C    $T_2$

900°C

800°C    $T_1$

T

1

2

10

## FIG 3B

1000°C    $T_2$

900°C

800°C    $T_1$

T

10

Europäisches
Patentamt

European
Patent Office

Office européen
des brevets

# EUROPÄISCHER RECHERCHENBERICHT

Nummer der Anmeldung

EP 12 18 0414

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 743 729 B1 (GEN ELECTRIC [US]) 10. August 2011 (2011-08-10) * Spalte 18, Absatz 75 * * Spalte 10, Absatz 41 - Absatz 42; Ansprüche 1-20 * * Spalte 4, Absatz 16 - Absatz 17 * ----- | 1-15 | INV. C23C24/10 C23C26/00 B23K26/00 B23K26/34 F01D5/28 |
| X,D | EP 2 025 777 A2 (UNITED TECHNOLOGIES CORP [US]) 18. Februar 2009 (2009-02-18) * Seite 3, Absatz 12 - Seite 4, Absatz 17; Ansprüche 1-15 * ----- | 1,2,4-6, 8-15 | |
| X,D | EP 2 090 752 A2 (UNITED TECHNOLOGIES CORP [US]) 19. August 2009 (2009-08-19) * Spalte 1, Absatz 2 - Absatz 3; Ansprüche 1-15 * ----- | 1,2,4-6, 8-15 | |
| X | US 6 001 492 A (JACKSON MELVIN ROBERT [US] ET AL) 14. Dezember 1999 (1999-12-14) * das ganze Dokument * ----- | 9-15 | |
| A | WO 01/91924 A1 (UNIV TEXAS [US]) 6. Dezember 2001 (2001-12-06) * das ganze Dokument * ----- | 1-15 | RECHERCHIERTE SACHGEBIETE (IPC) C23C B23K F01D |

Der vorliegende Recherchenbericht wurde für alle Patentansprüche erstellt

| Recherchenort | Abschlußdatum der Recherche | Prüfer |
|---|---|---|
| München | 12. Dezember 2012 | Teppo, Kirsi-Marja |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

# EP 2 559 787 A1

**ANHANG ZUM EUROPÄISCHEN RECHERCHENBERICHT
ÜBER DIE EUROPÄISCHE PATENTANMELDUNG NR.**

EP 12 18 0414

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-12-2012

| Im Recherchenbericht angeführtes Patentdokument | | Datum der Veröffentlichung | Mitglied(er) der Patentfamilie | | Datum der Veröffentlichung |
|---|---|---|---|---|---|
| EP 1743729 | B1 | 10-08-2011 | CA | 2551249 A1 | 30-12-2006 |
| | | | CN | 1896463 A | 17-01-2007 |
| | | | EP | 1743729 A2 | 17-01-2007 |
| | | | JP | 2007051635 A | 01-03-2007 |
| | | | US | 2007003416 A1 | 04-01-2007 |
| | | | US | 2009280269 A1 | 12-11-2009 |
| EP 2025777 | A2 | 18-02-2009 | EP | 2025777 A2 | 18-02-2009 |
| | | | US | 2009028697 A1 | 29-01-2009 |
| EP 2090752 | A2 | 19-08-2009 | EP | 2090752 A2 | 19-08-2009 |
| | | | US | 2009208752 A1 | 20-08-2009 |
| | | | US | 2012007286 A1 | 12-01-2012 |
| US 6001492 | A | 14-12-1999 | KEINE | | |
| WO 0191924 | A1 | 06-12-2001 | AU | 7516401 A | 11-12-2001 |
| | | | EP | 1296776 A1 | 02-04-2003 |
| | | | US | 2002015654 A1 | 07-02-2002 |
| | | | WO | 0191924 A1 | 06-12-2001 |

EPO FORM P0461

Für nähere Einzelheiten zu diesem Anhang : siehe Amtsblatt des Europäischen Patentamts, Nr.12/82

15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2090752 A2
- EP 2025777 A2